Europäisches Patentamt

European Patent Office

Office européen des brevets

(19)

(11) EP 0 884 619 A2

(12) **EUROPEAN PATENT APPLICATION**

(43) Date of publication:
16.12.1998 Bulletin 1998/51

(51) Int. Cl.⁶: $G02F\ 1/133$

(21) Application number: 98304669.9

(22) Date of filing: 12.06.1998

(84) Designated Contracting States:
AT BE CH CY DE DK ES FI FR GB GR IE IT LI LU
MC NL PT SE
Designated Extension States:
AL LT LV MK RO SI

(30) Priority: 14.06.1997 GB 9712378

(71) Applicant:
SHARP KABUSHIKI KAISHA
Osaka-shi Osaka 545 (JP)

(72) Inventors:
• Walton, Harry Garth
Cowley, Oxford, OX4 3NE (GB)

• Raynes, Edward Peter
Oxford, OX1 4LQ (GB)
• Bock, Harald Reinhart
Oxford, OX4 3BE (GB)
• Towler, Michael John
Oxford, OX2 9AL (GB)

(74) Representative:
Robinson, John Stuart et al
Marks & Clerk
Nash Court
Oxford Business Park South
Oxford OX4 2RU (GB)

(54) **Plasma-addressed liquid crystal display device**

(57) A plasma addressed liquid crystal device comprises a first substrate 5 which provides a plasma addressing arrangement 3, 4, 6, 7, 11. This arrangement is provided with an alignment layer 12. A second substrate 2 likewise carries an alignment layer 15. Other elements such as electrodes 9 and polarisers or mirrors 19, 20 are provided to form a working device which is suitable for use as a display. The alignment layers 12, 15 cooperate with a liquid crystal layer 1 to form a surface mode liquid crystal device, for instance of the pi-cell or splayed nematic birefringent type.

FIG 2

**Description**

The present invention relates to a plasma addressed liquid crystal (PALC) device, for instance for use as a display.

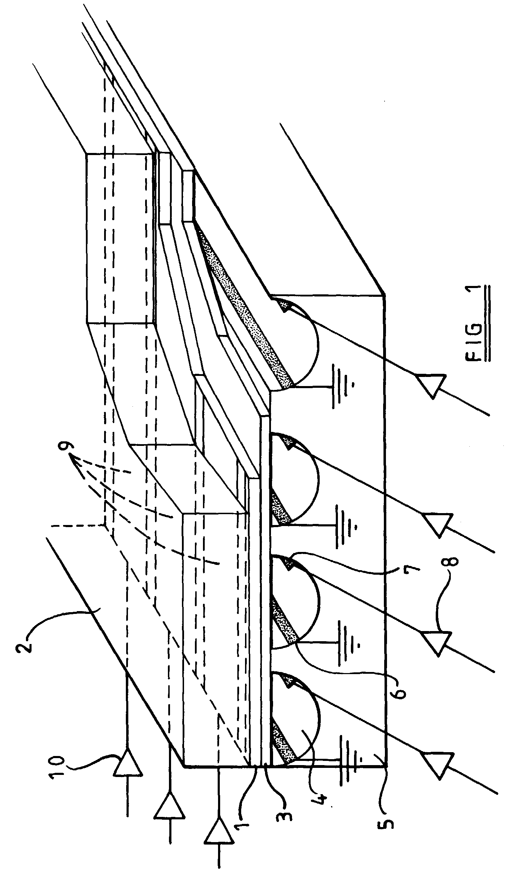

Figure 1 of the accompanying drawings illustrates a known type of PALC device comprising a layer 1 of a liquid crystal material confined between a glass substrate 2 and dielectric layer 3. The dielectric layer 3 separates the liquid crystal of the layer 1 from a periodic array of gas/plasma filled channels 4 which are etched into a glass substrate 5. Electrodes 6 and 7 acting as cathodes and anodes, respectively, extend along the channels 4. The cathodes 6 are connected to earth whereas the anodes 7 are connected to row drivers 8 of a strobe signal generator forming part of an address generator for refreshing the device a row at a time.

The substrate 2 carries on its lower surface electrode strips 9 made of a transparent conductor such as indium tin oxide (ITO) and forming a periodic array of column electrodes. The column electrodes 9 are connected to column drivers 10 of a data signal generator forming part of the address generator. The column electrodes 9 and the channels 4 extend perpendicularly to each other and form a periodic array of picture elements (pixels) at the regions of the liquid crystal layer 1 where they overlap when viewed from above.

In use, the data signal generator supplies data signals via the drivers 10 to the column electrodes 9 for refreshing a row of pixels. The state of the gas in each of the channels 4 determines the applied field which appears across the corresponding row of pixels. The voltage which actually appears across a pixel when data voltages are applied to the column electrodes 9 depends upon the state of the gas, ie. whether it behaves as a conducting plasma or a dielectric insulator.

When a sufficiently high voltage is supplied to the anode 7 of one of the channels 4, the gas in the channel ionises to an electrically conducting plasma. Image data voltages are applied across the pixels of the row, which are therefore refreshed with new image data.

The channels 4 are addressed or strobed in sequence and in synchronism with the generation of data voltages so that the displayed image is refreshed a row at a time. When all of the rows have been refreshed, the process is repeated for the next field or frame of image data.

A disadvantage of this type of PALC device is the need for the dielectric layer or barrier 3 between the liquid crystal layer 1 and the gas/plasma in the channels 4. For any given voltage applied to the column electrodes 9, only a fraction of the voltage appears across the liquid crystal layer 1 because some of the voltage is "dropped" across the dielectric layer 3. The ratio of the voltages across the layers 1 and 3 depends on the ratio of the dielectric constants and the thicknesses of these layers. For a liquid crystal layer of thickness $d_{LC}$ and dielectric constant $\varepsilon_{LC}$ and a dielectric layer of thickness $d_{barrier}$ and dielectric constant $\varepsilon_{barrier}$, the ratio is given by:

$$(d_{LC}/d_{barrier}) \cdot (\varepsilon_{barrier}/\varepsilon_{LC}) = (V_{LC}/V_{barrier}).$$

As disclosed in WO 96/19789, the ratio $(d_{LC}/d_{barrier})$ should be maximised in order to maximise the proportion of the applied voltage appearing across the liquid crystal layer 1. However, in practice, most liquid crystal devices used as high information content displays, such as computer screens and flat screen televisions, are restricted to liquid crystal layer thicknesses of the order of 5 micrometres. Also, it is generally impractical to handle large sheets of the dielectric layer, which is generally glass, having a thickness much less than 50 micrometres during manufacture.

Increasing the thickness of the liquid crystal layer 1 causes difficulties because thicker liquid crystal devices normally exhibit slow electro-optic responses. For example, it is known that the relaxation time of many liquid crystal devices is proportional to the square of the layer thickness.

A moving video image comprises a series of still images which must be updated or refreshed sufficiently quickly for the human eye to integrate them into a continuously changing image. If the individual images are updated too slowly, undesirable flickering is visible. To avoid the visibility of flickering, the electro-optic switching time of the liquid crystal layer 1 should be as fast as possible. For instance, it is normally necessary to update a video image at 60Hz or faster to avoid flicker so that the liquid crystal layer must respond in less than approximately 15 milliseconds.

Most commercially available liquid crystal displays of the active matrix driven high information content type rely on the well known twisted nematic mode. This mode tends to have limited response times which are typically greater than 15 milliseconds in devices whose liquid crystal layers are 5 micrometres thick. Any attempt to increase the thickness of such displays slows the response time still farther so that such displays are impractical for high information video rate displays.

Berezin et al, Sov. J. Quant. Electron. Vol 3 (1), p. 78-79, 1973 disclose the concept of a surface mode liquid crystal device in which all molecules are aligned with the direction of an applied field with the exception of a thin layer adjoining the electrodes.

US 4 635 051, the contents of which are incorporated herein by reference, discloses a surface liquid crystal device of the type known as a pi-cell.

WO 97/12275, the contents of which are incorporated herein by reference, discloses a negative dielectric surface switching nematic liquid crystal device.

Matsumoto et al, Journal of Applied Physics, Vol. 47, p.3842-3845, 1976, the contents of which are incorporated herein by reference, disclose a hybrid aligned nematic (HAN) device in which one surface of a nematic liquid crystal layer has low pretilt and the other surface is homeotropic, ie. substantially 90° pretilt.

According to the invention, there is provided a plasma addressed liquid crystal device comprising: a first substrate comprising a plasma addressing arrangement and a first surface; a second substrate comprising a second surface spaced from and facing the first surface; and a liquid crystal layer disposed between the first and second surfaces, characterised in that the liquid crystal layer and the first and second surfaces cooperate to form a surface mode liquid crystal device.

The term "surface mode liquid crystal device" as used herein means a device for which during switching between on and off states, the predominant optical modulation is controlled by reorientation in a region of a liquid crystal layer near one or both surfaces thereof.

The first surface may comprise a first alignment layer.

The second surface may comprise a second alignment layer.

The first and second alignment layers may have parallel alignment directions.

The liquid crystal layer may comprise a nematic liquid crystal material.

The nematic liquid crystal may be of negative dielectric anisotropy and may be switchable between first and second birefringent states in which the liquid crystal molecules in an intermediate region of the liquid crystal layer are in a splay state and in which the difference in optical retardation is an odd number of half wavelengths for a transmission mode device or an odd number of quarter wavelengths for a reflective mode device.

The first and second alignment layers may provide a pretilt of between substantially 80° and 90°.

The nematic liquid crystal may be of positive dielectric anisotropy and may be switchable between first and second birefringent states in which the liquid crystal molecules in an intermediate region of the liquid crystal layer are in a homogeneous state and in which the difference in optical retardation is an odd number of half wavelengths for a transmissive mode device or an odd number of quarter wavelengths for a reflective mode device.

The first and second alignment layers may provide a pretilt greater than substantially 1°.

The first and second alignment layers may provide a pretilt of less than substantially 10°. The first and second alignment layers may provide a pretilt of less than substantially 5°.

The liquid crystal layer may have a thickness greater or equal to substantially 6 micrometres.

The first substrate may comprise a plurality of gas-filled channels extending substantially parallel to each other and separated from the liquid crystal layer by a dielectric layer.

The dielectric layer may comprise glass.

The dielectric layer may have a thickness greater than or equal to substantially 50 micrometres.

The second substrate may comprise a plurality of strip electrodes extending substantially perpendicularly to the channels.

The device may comprise a fixed retarder having an optic axis which is substantially perpendicular to an optic axis of the liquid crystal layer.

The device may comprise first and second polarisers disposed on opposite sides of the liquid crystal layer.

The polarisation transmission directions of the first and second polarisers may be substantially parallel or may be substantially orthogonal.

The polarisation directions may be aligned at 45° to an optic axis of the liquid crystal layer.

The device may comprise a polariser and a reflector disposed on opposite sides of the liquid crystal layer.

The polarisation transmission direction may be aligned at 45° to an optic axis of the liquid crystal layer.

It is thus possible to provide a device having a fast switching response time while permitting a larger proportion of an applied electric field to be developed across the liquid crystal layer in a PALC device. The thickness of the liquid crystal layer may be increased while providing the relatively fast switching times and maintaining the thickness of a dielectric layer between the liquid crystal layer and gas-filled channels at a size which is convenient for handling during manufacture of the device. Manufacturing techniques for known PALC devices may be used with little or no penalty in terms of cost and complexity. PALC devices which are capable of operating at standard video rates and of providing high information content may readily be produced.

The invention will be further described, by way of example, with reference to the accompanying drawings, in which:

Figure 1 is a diagrammatic part-sectional view of a known type of PALC display;

Figure 2 is a cross-sectional diagram showing part of a PALC display constituting an embodiment of the invention;

Figures 3a to 3c are cross-sectional diagrams illustrating the liquid crystal mode of operation of the display of Figure 2;

Figure 4 is a diagram illustrating the relative orientations of various axes of the display of Figure 2; and

Figure 5 is a cross-sectional diagram showing part of a PALC display constituting another embodiment of the invention.

Like reference numerals refer to like parts throughout the drawings.

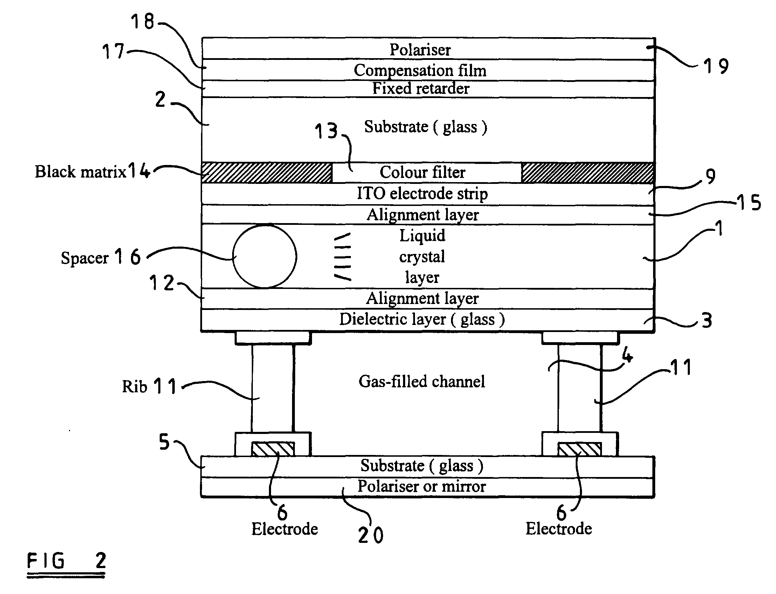

The display shown in Figure 2 comprises a layer 1 of nematic liquid crystal material having negative dielectric anisotropy. An example of a suitable material is ZL14788-000 available from, Merck, Darmstadt, Germany. The liquid crystal material may incorporate about one to two percent by weight of a photocurable diacrylate monomer, such as RM257 (also available from Merck), which may be polymerised whilst applying a field across the liquid crystal layer 1. Once photopolymerisation has taken place, the applied field may be removed and the liquid crystal molecules tend to remain oriented as though the voltage were still present. However, the liquid crystal molecules retain sufficient mobility that, at higher applied fields, they can be reoriented further to produce the liquid crystal mode described hereinafter. The layer 1 is confined between substrates 2 and 5 made of glass having a low sodium ion content, such as Corning 7059 available from Corning Incorporated, New York, USA.

The substrate 5 has formed thereon electrodes 6 and 7 made of any suitable conducting metal or other material, such as aluminium, chrome or tantalum oxide. Ribs 11 are formed on the substrate 5 on top of the electrodes 6 and 7 and define channels for containing a suitable gas, such as helium, which forms a plasma when a suitable voltage is applied between the electrodes 6 and 7. The walls of the channels 4 may be coated with a thin dielectric layer of so-called "Frit" as described in EP 0 798 738 to improve the uniformity of plasma discharge. A dielectric layer 3 encloses the channels 4 and comprises a thin layer of glass, for example having a thickness of 50 micrometres.

The layer 3 has formed thereon an alignment layer 12. For example, the alignment layer may be formed from two layers in the following way.

The dielectric layer 3 is spin-coated with a layer of polyimide, such as PI2555 available from DuPont, followed by baking at 250° C for one hour. The resulting layer is unidirectionally rubbed with a nylon cloth to produce a pretilt alignment direction. A mixture of organic reactive mesogen materials RM257 + 30% by weight of RM305 is dissolved in 15 parts by weight of toluene. A small amount, such as 1% by weight, of a photo initiator, such as Daracur 4265 available from Ciba Speciality Chemicals, Basel, Switzerland, is included and the solution is spun at 5krpm for ten seconds onto the polyimide-coated layer 3. The RM layers are cured by exposure to ultraviolet radiation under a nitrogen atmosphere to provide the alignment layer 12, which produces a pretilt of the order of 80°.

Red, green and blue triads of colour filters such as 13 are formed on the substrate 2. The filters may be of organic materials such as gelatine polyimides and may be formed in a conventional way. Light-proof regions forming a black matrix 14 are also deposited on the substrate 2 so as to prevent the ribs 11 from being visible when the device is viewed. The black matrix 14 may comprise a metal such as chrome and may be formed in a conventional way.

A thin layer of indium tin oxide (ITO) is deposited on the filters 13 and the matrix 14 to form the electrode strips 9. For instance, the ITO may be deposited by sputtering in an atmosphere of Argon at a pressure of a few mTorr followed by selective etching to provide the parallel strips extending perpendicularly to the channels 4. A passivation layer (not shown) of a material such as silicon nitride may be deposited, for instance by chemical vapour deposition, between the electrode strips 9 and the filters 13 and matrix 14.

An alignment layer 15 is formed on the electrode strips 9, for instance in the same way as the alignment layer 12. The substrates 2 and 5 are then arranged so that the alignment directions of the alignment layers 12 and 15 are parallel and are spaced by spacers 16 in the form of glass or plastic beads of, for example, 6 micrometres (available from Dodwell Hi-tech K.K., Tokyo, Japan). The region between the alignment layers 12 and 15 is filled with the liquid crystal material to form the liquid crystal layer 1.

A fixed retarder 17 is formed on the outer surface of the substrate 2. For instance, the fixed retarder 17 may provide a retardation of 72 nanometres and may comprise PMMA (Polymethylmethacrylate available from Comar Ltd, Cambridge, UK). The retarder 17 is arranged with its optic axis substantially perpendicular to the alignment directions of the alignment layers 12 and 15 and hence to the optic axis of the liquid crystal layer 1. A compensation film 18 is formed on the outer surface of the retarder 17 and provides positive retardation with its optic axis substantially perpendicular to the plane of the film 18. The compensation film 18 improves the viewing angle of the device when in use.

A polariser 19 is formed on the compensation film 18 with its polarising axis aligned at 45° to the alignment directions of the alignment layers 12 and 15. A polariser or mirror 20 is formed on the outer surface of the substrate 5. In order to provide a transmissive device, the element 20 is a polariser with its polarising axis parallel or perpendicular to the polarising axis of the polariser 19. In order to provide a reflective device, the element 20 comprises a mirror, such as a layer of aluminium or silver.

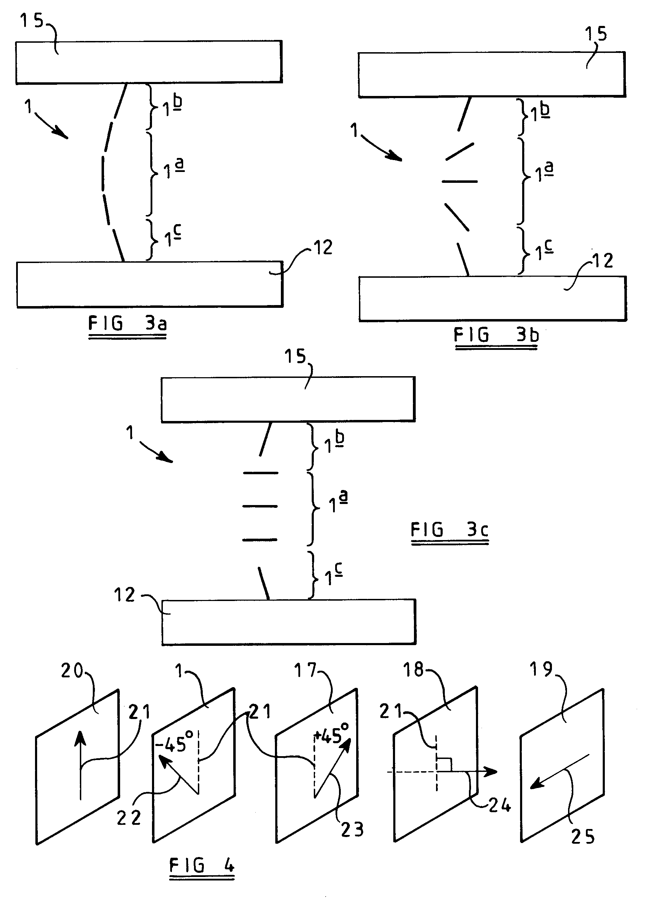

Figures 3a to 3c illustrate the liquid crystal mode of the device shown in Figure 2. For simplicity, only the liquid crystal layer 1 and the alignment layers 12 and 15 are shown.

The nematic liquid crystal of the layer 1 has negative dielectric anisotropy so that the molecules prefer to align with their short axes along an electric field. As a result of this and as a result of the mutually parallel alignment directions of the alignment layers 12 and 15, in the zero voltage state illustrated in Figure 3a, the liquid crystal molecules adopt a bend configuration across the thickness of the layer 1, this being the lowest energy state compatible with the requirement of the high pretilt at the surfaces adjacent the alignment layers 12 and 15. As the voltage and hence the applied field across the layer 1 is increased, the liquid crystal molecules in an intermediate region 1a realign to lie with their short axes along the direction of the applied field so as to produce a splay state as illustrated in Figure 3b. In the splay state at low voltages, only a thin part at the centre of the intermediate region 1a has its molecules aligned perpendicular to the applied field. In this state, because most of the molecules are predominantly perpendicular to the alignment layers 12 and 15 and hence to the substrates 2 and 5, the birefringence of the layer 1 is relatively small for light incident substantially normally on the device.

At higher voltages, more of the molecules in the intermediate region 1a reorient to lie with their short axes along the field direction as shown in Figure 3c so that the birefringence of the layer 1 increases. By modulating the applied voltage between a relatively low value, such as 2 volts, and a relatively high value, such as 6 volts, the birefringence of the layer 1 can be made to modulate between a relatively low value and a relatively high value, respectively. The retardation of the fixed retarder 17 subtracts from the retardation of the liquid crystal layer 1 and is chosen so that zero retardation is provided by the device at a predetermined lower drive voltage. In the case of a transmissive device, the net retardation of the layer 1 and the retarder 17 is half a wavelength for an upper drive voltage. In general, the retardation in the splay state is required to vary by an odd number of half wavelengths between the upper and lower drive voltages and intermediate drive voltages may provide grey level capability.

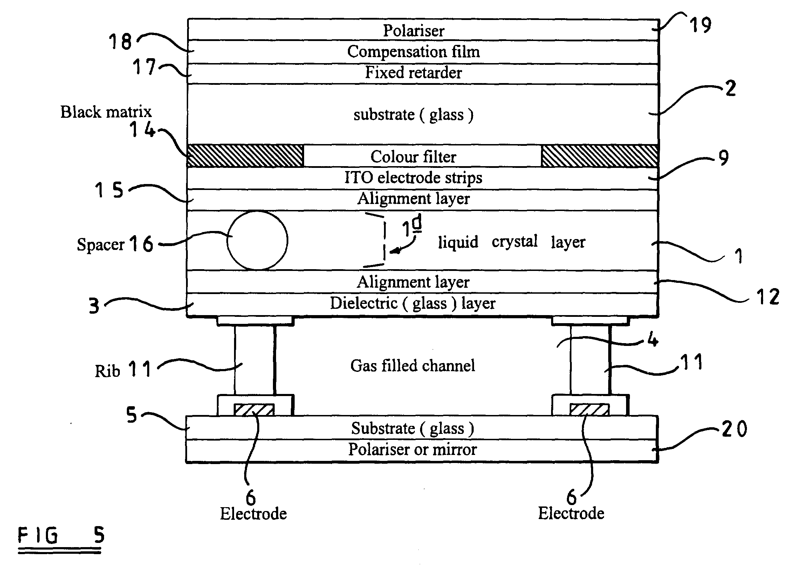

Figure 4 illustrates various axes for a transmissive embodiment of the device. The polarising axis or transmission direction of the polariser 20 is shown at 21 and defines a reference direction for the other axes illustrated in Figure 4. The alignment directions of the alignment layer 12 and 15 and hence the optic axis 22 of the layer 1 are oriented at -45° whereas the optic axis 23 of the fixed retarder 17 is oriented at +45°. The optic axis 24 of the compensation film 18 is oriented perpendicularly to the film 18. The polarising axis 25 of the polariser 19 is oriented at 90°.

When the field applied across a pixel of the device is such that the total retardation is zero, the pixel behaves substantially as "crossed" polarisers and is in a substantially opaque or low-transmission state. When the retardation of the liquid crystal layer 1 minus the retardation of the fixed retarder 17 is equal to a half wavelength, linearly polarised light from the polariser 20 has its direction of polarisation rotated by 90° and is transmitted by the polariser 19. The pixel is therefore in its transmissive state. Intermediate applied voltage may be used to provide intermediate retardations which in turn give intermediate transmission or attenuation levels so as to allow grey levels to be addressed between maximally transmissive (white) and maximally non-transmissive (black) states.

As described hereinbefore, the polarisation axis 25 of the polariser 19 may be parallel to the polarisation axis 21 of the polariser 20. Also, the element 20 may comprise a mirror to provide a reflective mode device. In this case, it is necessary for the retardation of the liquid crystal layer 1 to vary by a quarter wavelength (or an odd number of quarter wavelengths) between upper and lower drive voltages.

Figure 5 illustrates a device which differs from that of Figure 2 in that it is of the pi-cell type. The director configuration during operation is illustrated at 1d. The alignment layers 12 and 15 differ from those of Figure 2 in that they are arranged to provide a low pretilt of the order of 1° to 5°. These layers may be formed of a polyimide-type material such as Liralign AM-4200 (available from Merck, Darmstadt, Germany). For example, a 2% solution of a pre-polymer in a solvent such as N-methylpyrrolidone (available from Aldrich Ltd, Dorset, U.K.) is spun onto the underlying layer at 5krpm for 40 seconds. This is baked at 180° C for 1.5 hours to induce imidisation or cross-linking of the pre-polymer. Once cool, the alignment layers are unidirectionally rubbed with a soft cloth, for instance of cotton, to provide the pretilted alignment layers for the liquid crystal material.

The liquid crystal material of the layer 1 is of the positive dielectric anisotropy nematic type and may, for example, comprise a material known as E7 available from Merck, Darmstadt, Germany. Detailed operation of the pi-cell mode is described in US 4 635 051 and will not therefore be described further. Basically, the liquid crystal layer 1 varies its retardation by a half wavelength for a transmissive device or a quarter wavelength for a reflective device when the voltage (and hence the applied field) across the layer 1 varies between the upper and lower drive voltages. The optical operation is therefore as described hereinbefore. The optical switching time of the layer 1 when the applied voltage switches from the lower to the higher drive voltage is of the order of 0.5 milliseconds whereas the relaxation time corresponding to switching from the upper to the lower drive voltage is of the order of 3 milliseconds.

The thickness of the layer 1 is generally greater than or equal to substantially six micrometres. For instance, the thickness may be 6.2 micrometres. Other nematic liquid crystal materials may be used, such as MLC 6000-100 and ZLI 2293, both of which are available from Merck, Darmstadt, Germany. The retardation of the fixed retarder 17 may be chosen to provide a convenient voltage driving range for the device.

## Claims

1. A plasma addressed liquid crystal device comprising: a first substrate (5) comprising a plasma addressing arrangement (3,4,6,7,11) and a first surface (12); a second substrate (2) comprising a second surface (15) spaced from and facing the first surface (12); and a liquid crystal layer (1) disposed between the first and second surfaces (12,15), characterised in that the liquid crystal layer (1) and the first and second surfaces (12,15) cooperate to form a surface mode liquid crystal device.

2. A device as claimed in claim 1, characterised in that the first surface comprises a first alignment layer (12).

3. A device as claimed in claim 1 or 2, characterised in that the second surface comprises a second alignment layer (15).

4. A device as claimed in claim 3 when dependent on claim 2, characterised in that the first and second alignment layers (12,15) have parallel alignment directions.

5. A device as claimed in any one of the preceding claims, characterised in that the liquid crystal layer (1) comprises a nematic liquid crystal material.

6. A device as claimed in claim 5 when dependent on claim 4, characterised in that the nematic liquid crystal material is of negative dielectric anisotropy and is switchable between first and second birefringent states in which liquid crystal molecules in an intermediate region (1a) of the liquid crystal layer (1) are in a splay state and in which the difference in optical retardation is an odd number of half wavelengths for a transmissive mode device or an odd number of quarter wavelengths for a reflective mode device.

7. A device as claimed in claim 6, characterised in that the first and second alignment layers (12,15) provide a pretilt of between substantially 80° and 90°.

8. A device as claimed in claim 5 when dependent on claim 4, characterised in that the nematic liquid crystal is of positive dielectric anisotropy and is switchable between first and second birefringent states in which liquid crystal molecules in an intermediate region (1a) of the liquid crystal layer (1) are in a homogeneous state and in which the difference in optical retardation is an odd number of half wavelengths for a transmissive mode device or an odd number of quarter wavelengths for a reflective mode device.

9. A device as claimed in claim 8, characterised in that the first and second alignment layers (12,15) provide a pretilt greater than substantially 1°.

10. A device as claimed in claim 9, characterised in that the first and second alignment layers (12,15) provide a pretilt less than substantially 10°.

11. A device as claimed in claim 10, characterised in that the first and second alignment layers (12,15) provide a pretilt less than substantially 5°.

12. A device as claimed in any one of the preceding claims, characterised in that the liquid crystal layer (1) has a thickness greater than or equal to substantially six micrometres.

13. A device as claimed in any one of the preceding claims, characterised in that the first substrate (5) comprises a plurality of gas-filled channels (4) extending substantially parallel to each other and separated from the liquid crystal layer (1) by a dielectric layer (3).

14. A device as claimed in claim 13, characterised in that the dielectric layer (3) comprises glass.

15. A device as claimed in claim 13 or 14, characterised in that the dielectric layer (3) has a thickness greater than or equal to substantially 50 micrometres.

16. A device as claimed in any one of claims 13 to 15, characterised in that the second substrate (2) comprises a plurality of strip electrodes (9) extending substantially perpendicularly to the channels (4).

17. A device as claimed in any one of the preceding claims, characterised by a fixed retarder (17) having an optic axis (23) which is substantially perpendicular to an optic axis (22) of the liquid crystal layer (1).

18. A device as claimed in any one of the preceding claims, characterised by first and second polarisers (19,20) disposed on opposite sides of the liquid crystal layer (1).

19. A device as claimed in claim 18, characterised in that the polarisation transmission directions (21,25) of the first and second polarisers (19,20) are substantially parallel.

20. A device as claimed in claim 18, characterised in that the polarisation transmission directions (21,25) of the first and second polarisers (19,20) are substantially orthogonal.

21. A device as claimed in claim 19 or 20 characterised in that the polarisation directions (21,25) are aligned at 45° to an optic axis (22) of the liquid crystal layer (1).

22. A device as claimed in any one of claims 1 to 17, characterised by a polariser (19) and a reflector (20) disposed on opposite sides of the liquid crystal layer (1).

23. A device as claimed in claim 22, characterised in that the polarisation transmission direction (25) of the polariser (19) is aligned at 45° to an optic axis (22) of the liquid crystal layer (1).

FIG 1

EP 0 884 619 A2

| | Polariser |
|---|---|
| | Compensation film |
| | Fixed retarder |
| | Substrate ( glass ) |

Black matrix 14

| Colour filter |
|---|
| ITO electrode strip |
| Alignment layer |
| Liquid crystal layer |

Spacer 16

| Alignment layer |
|---|
| Dielectric layer ( glass ) |

Rib 11

Gas-filled channel

| Substrate ( glass ) |
|---|
| Polariser or mirror |

Electrode

FIG 2

FIG 3a

FIG 3b

FIG 3c

FIG 4

EP 0 884 619 A2

| | |
|---|---|
| 18 | Polariser — 19 |
| 17 | Compensation film |
| | Fixed retarder |
| | substrate ( glass ) — 2 |
| Black matrix 14 | |
| | Colour filter — 9 |
| | ITO electrode strips |
| 15 | Alignment layer |
| Spacer 16 | $1\underline{d}$ liquid crystal layer — 1 |
| | Alignment layer |
| 3 | Dielectric ( glass ) layer — 12 |
| Rib 11 | 4 Gas filled channel — 11 |
| 5 | Substrate ( glass ) — 20 Polariser or mirror |
| | 6 Electrode 6 Electrode |

FIG 5